# EUROPEAN PATENT SPECIFICATION

(11) **EP 4 195 081 B1**
(45) Date of publication and mention of the grant of the patent: **07.10.2026**
(21) Application number: 22202686.6
(22) Date of filing: 20.10.2022
(51) Int. Cl.: G06F 21/60, G06F 21/75, G06F 21/78, G06F 12/14, G06F 12/02

(54) **SECURING SENSITIVE DATA IN MEMORY**
SICHERUNG VON SENSIBLEN DATEN IN EINEM SPEICHER
SÉCURISATION DE DONNÉES SENSIBLES DANS UNE MÉMOIRE

(30) Priority: 07.12.2021 US 202117544240
(43) Date of publication of application: 14.06.2023
(73) Proprietor: Intel Corporation, Santa Clara, CA 95054 (US)
(72) Inventor: Polaszek, Damian, 84-206 Bieszkowice, Pomorskie (PL)
(74) Representative: Goddar, Heinz J.

(56) References cited:
- US-A1- 2007 016 803
- US-A1- 2020 250 318
- US-A1- 2022 171 714

## Description

### BACKGROUND

Compute processes which operate on sensitive data (e.g., passwords, private keys, etc.) usually obtain the sensitive data from memory in encrypted form. To make the sensitive data usable, the compute process decrypts the data and stores the result of the decryption process in a buffer in memory. When the sensitive data is stored as plaintext in a memory buffer, a potential attacker needs to perform only one memory dump to retrieve whole decrypted sensitive data. Then, the attacker needs only to find where sensitive data begins in the memory to read it byte by byte from the memory buffer.

US 2020/0250318 A1 discloses an improved method or security solution for securing cryptographic keys in a virtual machine RAM. A security solution is proposed to hide cryptographic keys in the cloud, without the necessity of any architectural modifications. The present solution only requires the availability of a Trusted Platform Module capable of creating and holding a protected public/private key pair. It lends itself to security-as-a-service scenarios where third parties perform encryption or decryption on behalf of data owners. This allows the present solution to be easily integrated and coupled with other existing cloud architectures. A decrypt-scatter or gather-decrypt solution which allows users to carry out encryption or decryption while protecting keys from unauthorized peeks by the cloud administrators is proposed.

US 2007/0016803 A1 relates to securing sensitive data in a memory. Sensitive data is stored in a secure buffer, and never in an unencrypted, accessible location at any time. The data is accessed only by low-level processor instructions that load only a portion of the data into processor registers. The portion of data can then be used before the next portion of data is transferred from the secure buffer into the processor registers. In some embodiments, only one portion is available at any time. In other embodiments, a number of portions may be available at one time. However, the entirety of the sensitive data is never present in the clear. Thus, the entirety of the sensitive data will never be available if an adversary gains access to the contents of memory.

### SUMMARY

The present invention is defined by the independent claims. Advantageous embodiments are described by the dependent claims.

### BRIEF DESCRIPTION OF THE DRAWINGS

The concepts described herein are illustrated by way of example and not by way of limitation in the accompanying figures. For simplicity and clarity of illustration, elements illustrated in the figures are not necessarily drawn to scale. Where considered appropriate, reference labels have been repeated among the figures to indicate corresponding or analogous elements.
Fig. 1 is a simplified schematic diagram of a data processing environment in which techniques to secure sensitive data in memory may be implemented, according to an embodiment.
Figs. 2A is a simplified schematic diagram of a decrypted memory buffer in which encrypted data is stored byte-by-byte, according to an embodiment.
Fig. 2B is a simplified schematic diagram of a decrypted memory buffer in which encrypted data is stored in a shuffled format with a key, according to an embodiment
Fig. 3 is a simplified schematic diagram of a data processing environment in which techniques to secure sensitive data in memory may be implemented, according to an embodiment.
Fig. 4 is a simplified schematic diagram of a decrypted memory buffer, according to an embodiment.
Fig. 5 is a flow diagram illustrating operations in a method to secure sensitive data in memory, according to an embodiment.
Fig. 6 is a flow diagram illustrating operations in a method to secure sensitive data in memory, according to an embodiment.
Fig. 7 is a block diagram illustrating a computing architecture which may be adapted to provide a method for secure PUF-based authentication using adversarial challenge selection according to an embodiment.

### DETAILED DESCRIPTION OF THE DRAWINGS

While the concepts of the present disclosure are susceptible to various modifications and alternative forms, specific embodiments thereof have been shown by way of example in the drawings and will be described herein in detail.

References in the specification to "one embodiment," "an embodiment," "an illustrative embodiment," etc., indicate that the embodiment described may include a particular feature, structure, or characteristic, but every embodiment may or may not necessarily include that particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described. Additionally, it should be appreciated that items included in a list in the form of "at least one A, B, and C" can mean (A); (B); (C); (A and B); (A and C); (B and C); or (A, B, and C). Similarly, items listed in the form of "at least one of A, B, or C" can mean (A); (B); (C); (A and B); (A and C); (B and C); or (A, B, and C).

The disclosed embodiments may be implemented, in some cases, in hardware, firmware, software, or any combination thereof. The disclosed embodiments may also be implemented as instructions carried by or stored on a transitory or non-transitory machine-readable (e.g., computer-readable) storage medium, which may be read and executed by one or more processors. A machine-readable storage medium may be embodied as any storage device, mechanism, or other physical structure for storing or transmitting information in a form readable by a machine (e.g., a volatile or non-volatile memory, a media disc, or other media device). In the drawings, some structural or method features may be shown in specific arrangements and/or orderings. However, it should be appreciated that such specific arrangements and/or orderings may not be required. Rather, in some embodiments, such features may be arranged in a different manner and/or order than shown in the illustrative figures. Additionally, the inclusion of a structural or method feature in a particular figure is not meant to imply that such feature is required in all embodiments and, in some embodiments, may not be included or may be combined with other features.

As described above, compute processes which operate on sensitive data (e.g., passwords, private keys, etc.) usually obtain the sensitive data from memory in encrypted form. To make the sensitive data usable, the compute process decrypts the data and stores the result of the decryption process in a buffer in memory. When the sensitive data is stored as plaintext in a memory buffer, a potential attacker needs to perform only one memory dump to retrieve whole decrypted sensitive data. Then, the attacker needs only to find where sensitive data begins in the memory to read it byte by byte from the memory buffer.

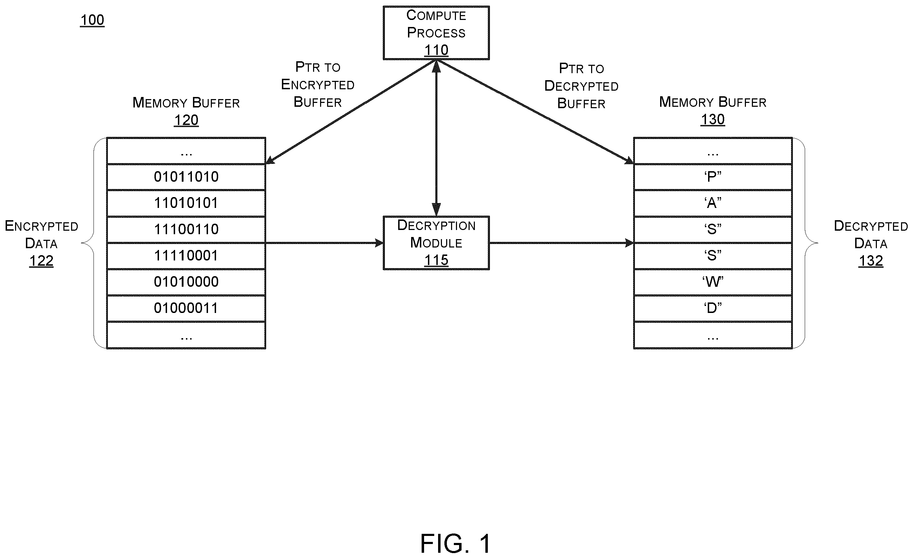

This issue may be illustrated with reference to Fig. 1, which is a simplified schematic diagram of a data processing environment 100 in which techniques to secure sensitive data in memory may be implemented, according to an embodiment. Referring to Fig. 1, the data processing environment 100 comprises a compute process 110, a decryption module 115, a first memory buffer 120 which contains encrypted data 122 and a second memory buffer 130 which contains decrypted data 132. The compute process 110 may maintain a pointer to the first data buffer 120 and a pointer to the second data buffer 130.

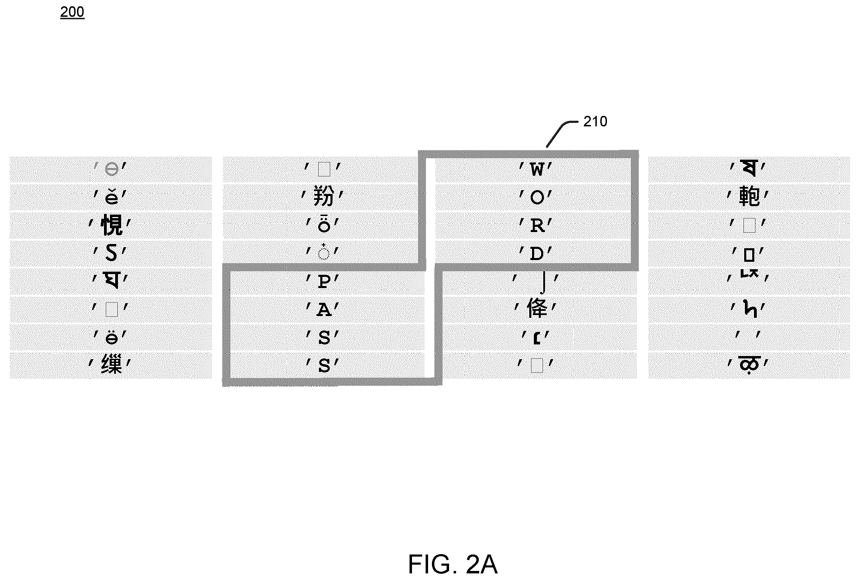

The encrypted data stored in memory buffer 120 may comprise sensitive data such as passwords, private keys, and the like. When the compute process 110 operates on the encrypted data, the encrypted data may be decrypted and stored in a decrypted form (e.g., plaintext) in memory buffer 130. When decrypted data is stored byte-by-byte in, a potential attacker need only obtain one memory dump from memory buffer 130 to retrieve the decrypted sensitive data. This is illustrated with reference to Fig. 2A, which is a simplified schematic diagram of a decrypted memory buffer 200. The attacker needs only to find where sensitive data 210 begins in the memory buffer 200 to read it from the memory buffer 200.

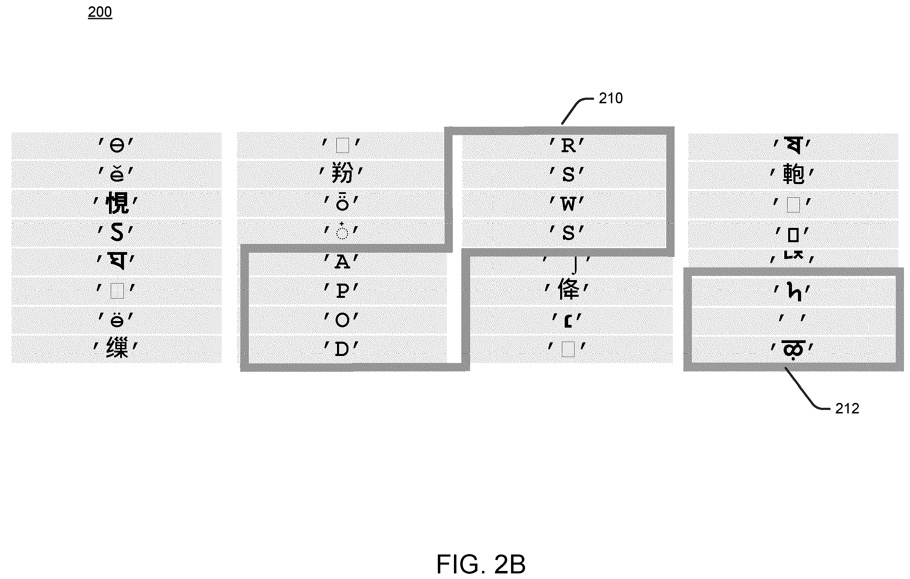

A shuffling technique may be implemented to address this issue. One example is illustrated with reference to Fig. 2B, which is a simplified schematic diagram of a decrypted memory buffer 200. In the embodiment depicted in Fig. 2B the sensitive data 210 in memory buffer 200 may be shuffled to randomize the order of the sensitive data 210. However, the key 212 for determining the shuffled order of the sensitive data 210 is stored in memory buffer 200. Thus, an attacker can still obtain the shuffled sensitive data 210 and the key 212 by obtaining a single memory dump of memory buffer 200.

To address these and other issues, described herein are technologies and techniques to secured sensitive data in memory. Techniques described herein utilize shuffling to secure decrypted sensitive data in a way that is known only for a specific platform and specific process. In some examples a hardware component may be utilized to keep secret the manner in which decrypted data is shuffled. Thus, the process responsible for decrypting data will shuffle encryption output bytes (along with random bytes too) and does not store the seed for shuffling in memory what prevents attacker to reverse shuffled output.

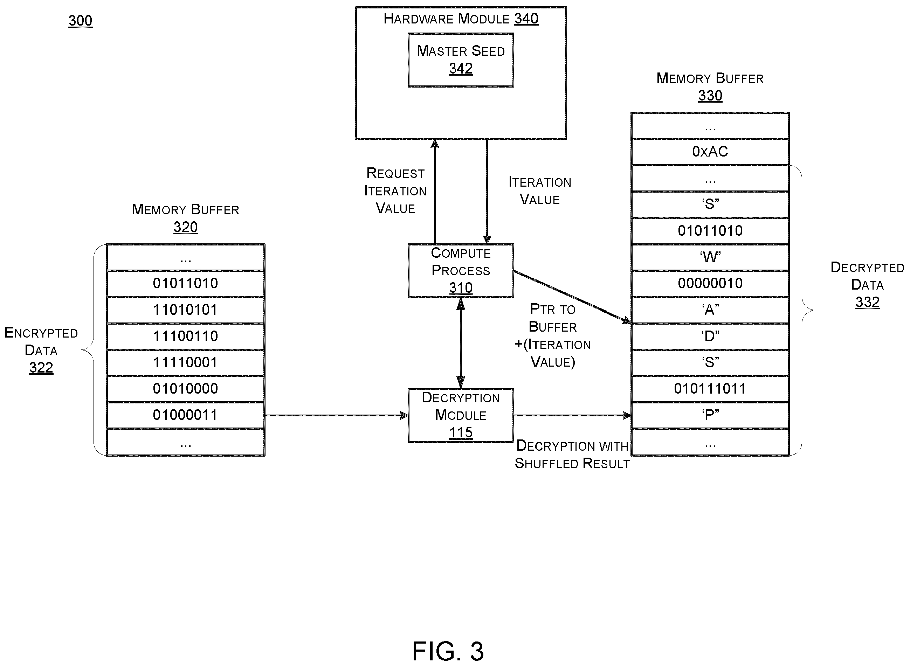

Aspects of the this may be illustrated with reference to Fig. 3, which is a simplified schematic diagram of a data processing environment 300 in which techniques to secure sensitive data in memory may be implemented, according to an embodiment. Referring to Fig. 3, the data processing environment 300 comprises a compute process 310, a decryption module 315, a first memory buffer 320 which contains encrypted data 322 and a second memory buffer 330 which contains decrypted data 332.

Environment 300 further comprises a hardware module 340 which includes a master seed 342 and processing circuitry to implement operations to secure sensitive data. In some examples the hardware module 340 is provisioned with a master seed 342 that is unique to each compute platform. Provisioning can be performed during the manufacturing process or automatically on the first platform boot. The master seed 342 is known only to hardware module 340, and cannot be retrieved or extracted from it by software.

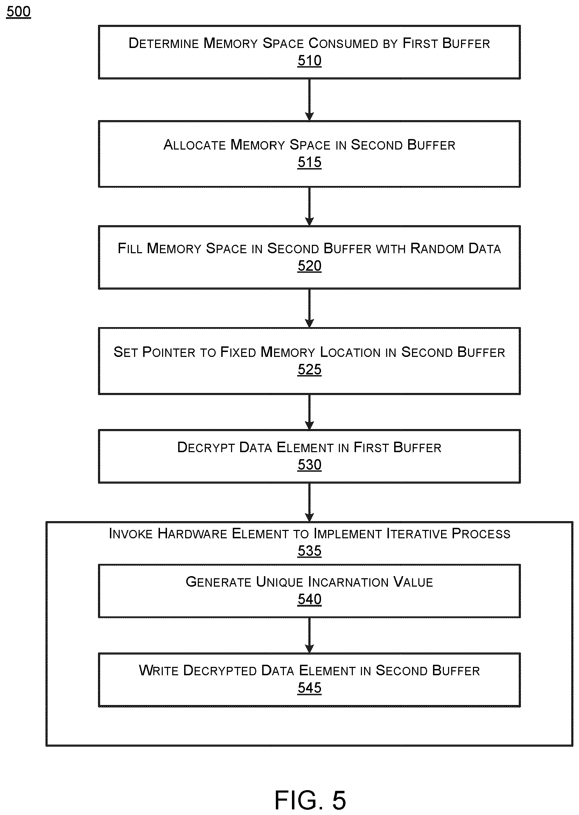

Operations implemented by the processing circuity of hardware module 340 may be described with reference to Fig. 5. Referring to Fig. 5, at operation 510 an amount of memory space consumed by the first memory buffer 320 comprising encrypted data to be decrypted for use by the compute process 310 is determined. In some examples the byte length of the encrypted data may be determined.

At operation 515 memory space is allocated in the second memory buffer 330. In some examples the amount of memory space allocated in the second memory buffer is greater than the amount of memory that was determined to be consumed by the first memory buffer 320 in operation 510. In some examples the amount is memory space allocated in the second memory buffer 330 is a multiple of the amount of memory space determined to be consumed by the first memory buffer 320. For example, the amount of space allocated in the second memory buffer may be twice, or three times the amount of memory space determined to be consumed by the first memory buffer 320.

At operation 520 the memory space in the second memory buffer 330 is filled with random data. At operation 525 a pointer is set to a fixed memory location in the second memory buffer 330. In some examples the pointer may be set to the beginning of the second memory buffer.

At operation 530 the decryption module 315 decrypts an encrypted data element in the first memory buffer. The decrypted data element may be provided to the compute process 310. In other examples the decryption operation may be performed by the processing circuitry of the hardware element 340. In further examples the decryption operation may be performed by the compute process 310 or another process executing outside the hardware element 340.

At operation 535 the compute process invokes the hardware module 340 to perform an iterative process to read encrypted data from the first memory buffer 320 and write the decrypted data to the second memory buffer 330. At operation 540 the processing circuitry in the hardware element generates a unique incarnation value using the master seed 342 based on inputs from the compute process 310 including a process identifier (e.g., PID), an iteration value, and an expected number of iterations. The unique incarnation value should be based on a function that is resistant to reverse engineering such that information about the master seed 342 cannot be derived from the unique incarnation value. Also, the unique incarnation value should be uniformly distributed along a distribution of the expected number of iterations such that each unique input produces a unique output, i.e., the same result is not returned more than once.

At operation 545 the decrypted data is written into the second memory buffer 330. In some examples the decrypted data is written to a memory address at the fixed memory location set by the pointer in operation 525 plus the unique incarnation value returned in operation 540.

In some examples the operations 530 through 545 are repeated until all the data from the first memory buffer 320 has been decrypted and written to the second memory buffer 330. For example, the iterative process may start at the beginning of memory buffer 310 and step incrementally through the addresses of the first data buffer 320 until reaching the end of the first data buffer 320.

Assume, for example, that the compute process 310 needs to decrypt data in the first memory buffer that is 1024 bytes length using a multiple of two (2). The compute process 310 expects that output of the decryption is 1024 bytes long, so it allocates twice the number of bytes (2048 bytes) in the second memory 330, fills them with random data, and stores a pointer to the beginning of the second memory buffer 330. In an embodiment in which decryption is handled outside the hardware module, the compute process 310 obtains a first byte of decrypted data from decryption process and invokes the hardware module with parameters (UniqueValue: PID, Iteration: 0, Length: 2048). The processing circuitry in the hardware module performs a computation and returns number a unique value (e.g., 444). The compute process 310 stores the decrypted data in the at memory address 444 of the allocated buffer, so it writes encrypted byte in the buffer address plus returned value from Hardware Module. This process is repeated for remaining 1023 bytes of the decrypted data. In the final result there are 2048 bytes allocated by the process; half of them are random data and the other half are shuffled decrypted sensitive data.

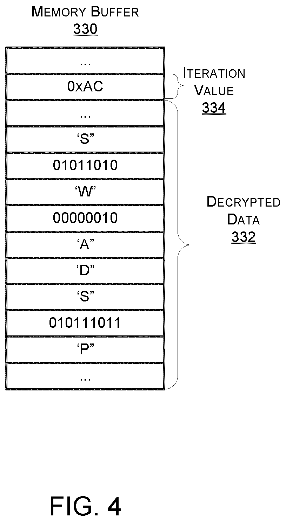

Fig. 4 is a simplified schematic diagram of a decrypted memory buffer 330, according to an embodiment. Following completion of the process outlined in Fig. 5, the memory buffer 330 comprises decrypted data 332 that is shuffled among random data and an iteration value 334, which may be stored always in the same address in the memory. Thus, with one memory dump attacker is able to obtain only one byte of the decrypted sensitive data, and attacker does not know which specific byte it is (i.e., in which order).

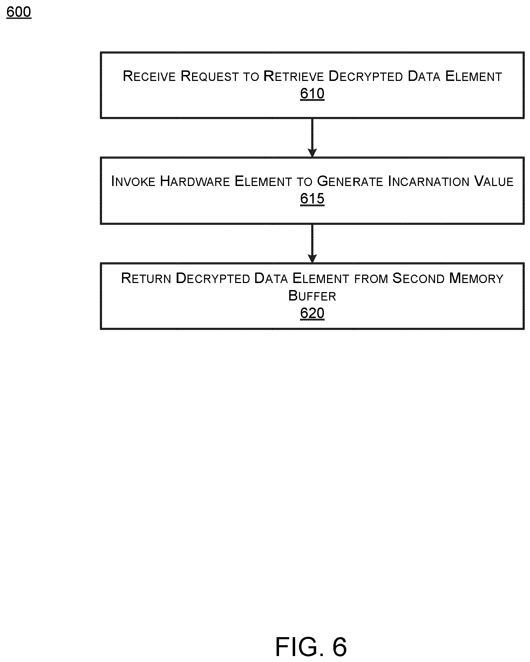

Fig. 6 is a flow diagram illustrating operations in a method 600 to retrieve secure sensitive data from memory, according to an embodiment. Referring to Fig. 6, at operation 610 a request to retrieve a decrypted data element from the second memory buffer 330 is received. At operation 615 the hardware element 340 is invoked to generate a unique incarnation value using the master seed 342 based on inputs from the compute process 310 including a process identifier (e.g., PID), an iteration value, and an expected number of iterations. At operation 620 the decrypted data is retrieved from the second memory buffer 330. In some examples the decrypted data is retrieved from a memory address at the fixed memory location set by the pointer in operation 525 plus the unique incarnation value returned in operation 615.

### Exemplary Computing Architecture

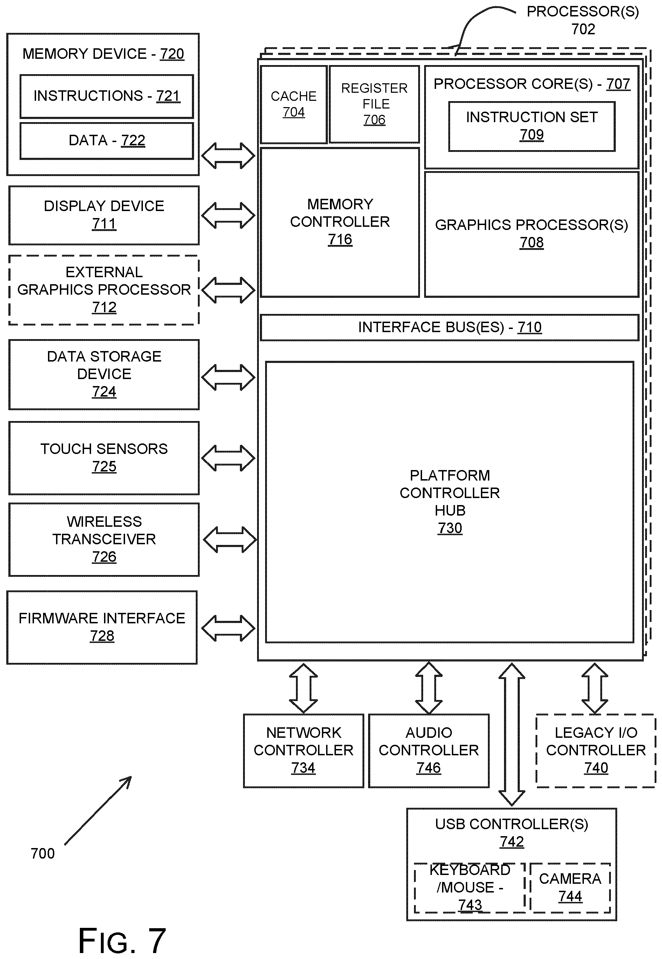

Fig. 7 is a block diagram illustrating a computing architecture which may be adapted to implement a secure address translation service using a permission table (e.g., HPT 135 or HPT 260) and based on a context of a requesting device in accordance with some examples. The embodiments may include a computing architecture supporting one or more of (i) verification of access permissions for a translated request prior to allowing a memory operation to proceed; (ii) prefetching of page permission entries of an HPT responsive to a translation request; and (iii) facilitating dynamic building of the HPT page permissions by system software as described above.

In various embodiments, the computing architecture 700 may comprise or be implemented as part of an electronic device. In some embodiments, the computing architecture 700 may be representative, for example, of a computer system that implements one or more components of the operating environments described above. In some embodiments, computing architecture 700 may be representative of one or more portions or components in support of a secure address translation service that implements one or more techniques described herein.

As used in this application, the terms "system" and "component" and "module" are intended to refer to a computer-related entity, either hardware, a combination of hardware and software, software, or software in execution, examples of which are provided by the exemplary computing architecture 700. For example, a component can be, but is not limited to being, a process running on a processor, a processor, a hard disk drive or solid state drive (SSD), multiple storage drives (of optical and/or magnetic storage medium), an object, an executable, a thread of execution, a program, and/or a computer. By way of illustration, both an application running on a server and the server can be a component. One or more components can reside within a process and/or thread of execution, and a component can be localized on one computer and/or distributed between two or more computers. Further, components may be communicatively coupled to each other by various types of communications media to coordinate operations. The coordination may involve the unidirectional or bi-directional exchange of information. For instance, the components may communicate information in the form of signals communicated over the communications media. The information can be implemented as signals allocated to various signal lines. In such allocations, each message is a signal. Further embodiments, however, may alternatively employ data messages. Such data messages may be sent across various connections. Exemplary connections include parallel interfaces, serial interfaces, and bus interfaces.

The computing architecture 700 includes various common computing elements, such as one or more processors, multi-core processors, co-processors, memory units, chipsets, controllers, peripherals, interfaces, oscillators, timing devices, video cards, audio cards, multimedia input/output (I/O) components, power supplies, and so forth. The embodiments, however, are not limited to implementation by the computing architecture 700.

As shown in Fig. 7, the computing architecture 700 includes one or more processors 702 and one or more graphics processors 708, and may be a single processor desktop system, a multiprocessor workstation system, or a server system having a large number of processors 702 or processor cores 707. In on embodiment, the system 700 is a processing platform incorporated within a system-on-a-chip (SoC or SOC) integrated circuit for use in mobile, handheld, or embedded devices.

An embodiment of system 700 can include, or be incorporated within, a server-based gaming platform, a game console, including a game and media console, a mobile gaming console, a handheld game console, or an online game console. In some embodiments system 700 is a mobile phone, smart phone, tablet computing device or mobile Internet device. Data processing system 700 can also include, couple with, or be integrated within a wearable device, such as a smart watch wearable device, smart eyewear device, augmented reality device, or virtual reality device. In some embodiments, data processing system 700 is a television or set top box device having one or more processors 702 and a graphical interface generated by one or more graphics processors 708.

In some embodiments, the one or more processors 702 each include one or more processor cores 707 to process instructions which, when executed, perform operations for system and user software. In some embodiments, each of the one or more processor cores 707 is configured to process a specific instruction set 714. In some embodiments, instruction set 709 may facilitate Complex Instruction Set Computing (CISC), Reduced Instruction Set Computing (RISC), or computing via a Very Long Instruction Word (VLIW). Multiple processor cores 707 may each process a different instruction set 709, which may include instructions to facilitate the emulation of other instruction sets. Processor core 707 may also include other processing devices, such a Digital Signal Processor (DSP).

In some embodiments, the processor 702 includes cache memory 704. Depending on the architecture, the processor 702 can have a single internal cache or multiple levels of internal cache. In some embodiments, the cache memory is shared among various components of the processor 702. In some embodiments, the processor 702 also uses an external cache (e.g., a Level-3 (L3) cache or Last Level Cache (LLC)) (not shown), which may be shared among processor cores 707 using known cache coherency techniques. A register file 706 is additionally included in processor 702 which may include different types of registers for storing different types of data (e.g., integer registers, floating point registers, status registers, and an instruction pointer register). Some registers may be general-purpose registers, while other registers may be specific to the design of the processor 702.

In some embodiments, one or more processor(s) 702 are coupled with one or more interface bus(es) 710 to transmit communication signals such as address, data, or control signals between processor 702 and other components in the system. The interface bus 710, in one embodiment, can be a processor bus, such as a version of the Direct Media Interface (DMI) bus. However, processor buses are not limited to the DMI bus, and may include one or more Peripheral Component Interconnect buses (e.g., PCI, PCI Express), memory buses, or other types of interface buses. In one embodiment the processor(s) 702 include an integrated memory controller 716 and a platform controller hub 730. The memory controller 716 facilitates communication between a memory device and other components of the system 700, while the platform controller hub (PCH) 730 provides connections to I/O devices via a local I/O bus.

Memory device 720 can be a dynamic random-access memory (DRAM) device, a static random-access memory (SRAM) device, flash memory device, phase-change memory device, or some other memory device having suitable performance to serve as process memory. In one embodiment the memory device 720 can operate as system memory for the system 700, to store data 722 and instructions 721 for use when the one or more processors 702 execute an application or process. Memory controller hub 716 also couples with an optional external graphics processor 712, which may communicate with the one or more graphics processors 708 in processors 702 to perform graphics and media operations. In some embodiments a display device 711 can connect to the processor(s) 702. The display device 711 can be one or more of an internal display device, as in a mobile electronic device or a laptop device or an external display device attached via a display interface (e.g., DisplayPort, etc.). In one embodiment the display device 711 can be a head mounted display (HMD) such as a stereoscopic display device for use in virtual reality (VR) applications or augmented reality (AR) applications.

In some embodiments the platform controller hub 730 enables peripherals to connect to memory device 720 and processor 702 via a high-speed I/O bus. The I/O peripherals include, but are not limited to, an audio controller 746, a network controller 734, a firmware interface 728, a wireless transceiver 726, touch sensors 725, a data storage device 724 (e.g., hard disk drive, flash memory, etc.). The data storage device 724 can connect via a storage interface (e.g., SATA) or via a peripheral bus, such as a Peripheral Component Interconnect bus (e.g., PCI, PCI Express). The touch sensors 725 can include touch screen sensors, pressure sensors, or fingerprint sensors. The wireless transceiver 726 can be a Wi-Fi transceiver, a Bluetooth transceiver, or a mobile network transceiver such as a 3G, 4G, Long Term Evolution (LTE), or 5G transceiver. The firmware interface 728 enables communication with system firmware, and can be, for example, a unified extensible firmware interface (UEFI). The network controller 734 can enable a network connection to a wired network. In some embodiments, a high-performance network controller (not shown) couples with the interface bus 710. The audio controller 746, in one embodiment, is a multi-channel high definition audio controller. In one embodiment the system 700 includes an optional legacy I/O controller 740 for coupling legacy (e.g., Personal System 2 (PS/2)) devices to the system. The platform controller hub 730 can also connect to one or more Universal Serial Bus (USB) controllers 742 connect input devices, such as keyboard and mouse 743 combinations, a camera 744, or other USB input devices.

**In** the description above, for the purposes of explanation, numerous specific details are set forth in order to provide a thorough understanding of the described embodiments. It will be apparent, however, to one skilled in the art that embodiments may be practiced without some of these specific details. In other instances, well-known structures and devices are shown in block diagram form. There may be intermediate structure between illustrated components. The components described or illustrated herein may have additional inputs or outputs that are not illustrated or described.

Various embodiments may include various processes. These processes may be performed by hardware components or may be embodied in computer program or machine-executable instructions, which may be used to cause a general-purpose or special-purpose processor or logic circuits programmed with the instructions to perform the processes. Alternatively, the processes may be performed by a combination of hardware and software.

Portions of various embodiments may be provided as a computer program product, which may include a computer-readable medium having stored thereon computer program instructions, which may be used to program a computer (or other electronic devices) for execution by one or more processors to perform a process according to certain embodiments. The computer-readable medium may include, but is not limited to, magnetic disks, optical disks, read-only memory (ROM), random access memory (RAM), erasable programmable read-only memory (EPROM), electrically-erasable programmable read-only memory (EEPROM), magnetic or optical cards, flash memory, or other type of computer-readable medium suitable for storing electronic instructions. Moreover, embodiments may also be downloaded as a computer program product, wherein the program may be transferred from a remote computer to a requesting computer.

Many of the methods are described in their most basic form, but processes can be added to or deleted from any of the methods and information can be added or subtracted from any of the described messages without departing from the basic scope of the present embodiments. It will be apparent to those skilled in the art that many further modifications and adaptations can be made. The particular embodiments are not provided to limit the concept but to illustrate it. The scope of the embodiments is not to be determined by the specific examples provided above but only by the claims below.

If it is said that an element "A" is coupled to or with element "B," element A may be directly coupled to element B or be indirectly coupled through, for example, element C. When the specification or claims state that a component, feature, structure, process, or characteristic A "causes" a component, feature, structure, process, or characteristic B, it means that "A" is at least a partial cause of "B" but that there may also be at least one other component, feature, structure, process, or characteristic that assists in causing "B." If the specification indicates that a component, feature, structure, process, or characteristic "may", "might", or "could" be included, that particular component, feature, structure, process, or characteristic is not required to be included. If the specification or claim refers to "a" or "an" element, this does not mean there is only one of the described elements.

An embodiment is an implementation or example. Reference in the specification to "an embodiment," "one embodiment," "some embodiments," or "other embodiments" means that a particular feature, structure, or characteristic described in connection with the embodiments is included in at least some embodiments, but not necessarily all embodiments. The various appearances of "an embodiment," "one embodiment," or "some embodiments" are not necessarily all referring to the same embodiments. It should be appreciated that in the foregoing description of exemplary embodiments, various features are sometimes grouped together in a single embodiment, figure, or description thereof for the purpose of streamlining the disclosure and aiding in the understanding of one or more of the various novel aspects. This method of disclosure, however, is not to be interpreted as reflecting an intention that the claimed embodiments requires more features than are expressly recited in each claim. Rather, as the following claims reflect, novel aspects lie in less than all features of a single foregoing disclosed embodiment.

## Claims

1. A method (500) performed by a processing circuitry of a hardware module, the method comprising:
determining (510) a first amount of memory space consumed by a first memory buffer (120, 320) comprising encrypted data to be decrypted for use by a compute process (110, 310);
allocating (515), to a second memory buffer (130, 330), a second amount of memory space which is greater than the first amount of memory space consumed by the first memory buffer (120, 320);
filling (520) the second amount of memory space with random data;
setting (525) a pointer to a fixed memory location of the second memory buffer (130, 330);
decrypting (530) a data element that resides in the first memory buffer (120, 320); and
invoking (535) a hardware element (340) to implement an iterative process to:
generate (540) a unique incarnation value based at least in part on an iteration value input; and
write (545) the decrypted data element to the second memory buffer (130, 330) to a memory address at the fixed memory location plus the unique incarnation value.

2. The method (500) of claim 1, wherein the second amount of memory space is a multiple of the first amount of memory space.

3. The method (500) of any one of claims 1-2, wherein the fixed memory location of the second memory buffer corresponds to a beginning of the second memory buffer (130, 330).

4. The method (500) of any one of claims 1-3, wherein the unique incarnation value is based on inputs comprising:
a process identifier;
an iteration value (334); and
an expected number of iterations.

5. The method (500) of any one of claims 1-4, wherein the iterative process is repeated until the encrypted data in the first memory buffer (120, 320) has been decrypted and written to the second memory buffer (130, 330).

6. The method (500) of any one of claims 1-5, wherein the iterative process is implemented in a hardware element (340).

7. The method (500) of any one of claims 1-6, further comprising:
receiving a request to retrieve the decrypted data element corresponding to an encrypted data element in the first memory buffer (120, 320);
invoking the hardware element (340) to generate the unique incarnation value based at least in part on the iteration value input; and
returning the decrypted data element from the second memory buffer (130, 330) from the memory address at the fixed memory location plus the unique incarnation value.

8. An apparatus comprising:
a first memory buffer (120, 320) comprising encrypted data to be decrypted for use by a compute process (110, 310);
a second memory buffer (130, 330);
processing circuitry communicatively coupled to the first memory buffer (120, 320) and the second memory buffer (130, 330), the processing circuitry being configured to:
determine a first amount of memory space consumed by the first memory buffer (120, 320);
allocate, to the second memory buffer (130, 330), a second amount of memory space which is greater than the first amount of memory space consumed by the first memory buffer (120, 320);
fill the second amount of memory space with random data;
set a pointer to a fixed memory location of the second memory buffer (130, 330);
decrypt a data element that resides in the first memory buffer (120, 320); and
invoke a hardware element (340) to implement an iterative process to:
generate a unique incarnation value based at least in part on an iteration value input; and
write the decrypted data element to the second memory buffer (130, 330) to a memory address at the fixed memory location plus the unique incarnation value.

9. The apparatus of claim 8, wherein the second amount of memory space is a multiple of the first amount of memory space.

10. The apparatus of any one of claims 8-9, wherein the fixed memory location of the second memory buffer corresponds to a beginning of the second memory buffer (130, 330).

11. The apparatus of any one of claims 8-10, wherein the unique incarnation value is based on inputs comprising:
a process identifier;
an iteration value (334); and
an expected number of iterations.

12. The apparatus of any one of claims 8-11, wherein the iterative process is repeated until the encrypted data in the first memory buffer (120, 320) has been decrypted and written to the second memory buffer (130, 330).

13. The apparatus of any one of claims 8-12, wherein the iterative process is implemented in a hardware element (340).

14. The apparatus of any one of claims 8-13, the processing circuitry being configured to:
receive a request to retrieve the decrypted data element corresponding to an encrypted data element in the first memory buffer (120, 320);
invoke the hardware element (340) to generate the unique incarnation value based at least in part on the iteration value input; and
return the decrypted data element from the second memory buffer (130, 330) from the memory address at the fixed memory location plus the unique incarnation value.

## Patentansprüche

1. Verfahren (500), das von einer Verarbeitungsschaltungsanordnung eines Hardwaremoduls durchgeführt wird, wobei das Verfahren Folgendes umfasst:
Bestimmen (510) einer ersten Menge Speicherplatz, die von einem ersten Speicherpuffer (120, 320) belegt wird, der verschlüsselte Daten umfasst, die zur Verwendung durch einen Rechenprozess (110, 310) entschlüsselt werden sollen;
Zuweisen (515) einer zweiten Menge Speicherplatz, die größer ist als die erste Menge Speicherplatz, die von dem ersten Speicherpuffer (120, 320) belegt wird, zu einem zweiten Speicherpuffer (130, 330);
Füllen (520) der zweiten Menge Speicherplatz mit Zufallsdaten;
Setzen (525) eines Zeigers auf einen festen Speicherort des zweiten Speicherpuffers (130, 330);
Entschlüsseln (530) eines Datenelements, das sich in dem ersten Speicherpuffer (120, 320) befindet; und
Aufrufen (535) eines Hardwareelements (340), um einen iterativen Prozess für Folgendes zu implementieren:
Erzeugen (540) eines eindeutigen Inkarnationswerts zumindest teilweise basierend auf einer Iterationswerteingabe; und
Schreiben (545) des entschlüsselten Datenelements in den zweiten Speicherpuffer (130, 330) an eine Speicheradresse an dem festen Speicherort zuzüglich des eindeutigen Inkarnationswerts.

2. Verfahren (500) nach Anspruch 1, wobei die zweite Menge Speicherplatz ein Vielfaches der ersten Menge Speicherplatz ist.

3. Verfahren (500) nach einem der Ansprüche 1-2, wobei der feste Speicherort des zweiten Speicherpuffers einem Anfang des zweiten Speicherpuffers (130, 330) entspricht.

4. Verfahren (500) nach einem der Ansprüche 1-3, wobei der eindeutige Inkarnationswert auf Eingaben basiert, die Folgendes umfassen:
eine Prozesskennung;
einen Iterationswert (334); und
eine erwartete Anzahl von Iterationen.

5. Verfahren (500) nach einem der Ansprüche 1-4, wobei der iterative Prozess wiederholt wird, bis die verschlüsselten Daten in dem ersten Speicherpuffer (120, 320) entschlüsselt und in den zweiten Speicherpuffer (130, 330) geschrieben wurden.

6. Verfahren (500) nach einem der Ansprüche 1-5, wobei der iterative Prozess in einem Hardwareelement (340) implementiert wird.

7. Verfahren (500) nach einem der Ansprüche 1-6, ferner umfassend:
Empfangen einer Anforderung zum Abrufen des entschlüsselten Datenelements, das einem verschlüsselten Datenelement in dem ersten Speicherpuffer (120, 320) entspricht;
Aufrufen des Hardwareelements (340), um den eindeutigen Inkarnationswert zumindest teilweise basierend auf der Iterationswerteingabe zu erzeugen; und
Zurückgeben des entschlüsselten Datenelements aus dem zweiten Speicherpuffer (130, 330) von der Speicheradresse an dem festen Speicherort zuzüglich des eindeutigen Inkarnationswerts.

8. Einrichtung, umfassend:
einen ersten Speicherpuffer (120, 320), der verschlüsselte Daten umfasst, die zur Verwendung durch einen Rechenprozess (110, 310) entschlüsselt werden sollen;
einen zweiten Speicherpuffer (130, 330);
eine Verarbeitungsschaltungsanordnung, die kommunikativ mit dem ersten Speicherpuffer (120, 320) und dem zweiten Speicherpuffer (130, 330) gekoppelt ist, wobei die Verarbeitungsschaltungsanordnung zu Folgendem konfiguriert ist:
Bestimmen einer ersten Menge Speicherplatz, die von dem ersten Speicherpuffer (120, 320) belegt wird;
Zuweisen einer zweiten Menge Speicherplatz, die größer ist als die erste Menge Speicherplatz, die von dem ersten Speicherpuffer (120, 320) belegt wird, zu dem zweiten Speicherpuffer (130, 330);
Füllen der zweiten Menge Speicherplatz mit Zufallsdaten;
Setzen eines Zeigers auf einen festen Speicherort des zweiten Speicherpuffers (130, 330);
Entschlüsseln eines Datenelements, das sich in dem ersten Speicherpuffer (120, 320) befindet; und
Aufrufen eines Hardwareelements (340), um einen iterativen Prozess für Folgendes zu implementieren:
Erzeugen eines eindeutigen Inkarnationswerts zumindest teilweise basierend auf einer Iterationswerteingabe; und
Schreiben des entschlüsselten Datenelements in den zweiten Speicherpuffer (130, 330) an eine Speicheradresse an dem festen Speicherort zuzüglich des eindeutigen Inkarnationswerts.

9. Einrichtung nach Anspruch 8, wobei die zweite Menge Speicherplatz ein Vielfaches der ersten Menge Speicherplatz ist.

10. Einrichtung nach einem der Ansprüche 8-9, wobei der feste Speicherort des zweiten Speicherpuffers einem Anfang des zweiten Speicherpuffers (130, 330) entspricht.

11. Einrichtung nach einem der Ansprüche 8-10, wobei der eindeutige Inkarnationswert auf Eingaben basiert, die Folgendes umfassen:
eine Prozesskennung;
einen Iterationswert (334); und
eine erwartete Anzahl von Iterationen.

12. Einrichtung nach einem der Ansprüche 8-11, wobei der iterative Prozess wiederholt wird, bis die verschlüsselten Daten in dem ersten Speicherpuffer (120, 320) entschlüsselt und in den zweiten Speicherpuffer (130, 330) geschrieben wurden.

13. Einrichtung nach einem der Ansprüche 8-12, wobei der iterative Prozess in einem Hardwareelement (340) implementiert wird.

14. Einrichtung nach einem der Ansprüche 8-13, wobei die Verarbeitungsschaltungsanordnung ferner zu Folgendem konfiguriert ist;
Empfangen einer Anforderung zum Abrufen des entschlüsselten Datenelements, das einem verschlüsselten Datenelement in dem ersten Speicherpuffer (120, 320) entspricht;
Aufrufen des Hardwareelements (340), um den eindeutigen Inkarnationswert zumindest teilweise basierend auf der Iterationswerteingabe zu erzeugen; und
Zurückgeben des entschlüsselten Datenelements aus dem zweiten Speicherpuffer (130, 330) von der Speicheradresse an dem festen Speicherort zuzüglich des eindeutigen Inkarnationswerts.

## Revendications

1. Procédé (500) effectué par des circuits de traitement d'un module matériel, le procédé comprenant :
la détermination (510) d'une première quantité d'espace mémoire consommée par un premier tampon mémoire (120, 320) comprenant des données chiffrées à déchiffrer pour une utilisation par un processus de calcul (110, 310) ;
l'allocation (515), à un second tampon mémoire (130, 330), d'une seconde quantité d'espace mémoire qui est supérieure à la première quantité d'espace mémoire consommée par le premier tampon mémoire (120, 320) ;
le remplissage (520) de la seconde quantité d'espace mémoire de données aléatoires ;
le placement (525) d'un pointeur sur un emplacement de mémoire fixe du second tampon mémoire (130, 330) ;
le décryptage (530) d'un élément de données qui réside dans le premier tampon mémoire (120, 320) ; et
l'invocation (535) d'un élément matériel (340) pour mettre en œuvre un processus itératif pour :
générer (540) une valeur d'incarnation unique basée au moins en partie sur une entrée de valeur d'itération ; et
écrire (545) l'élément de données décrypté dans le second tampon mémoire (130, 330) sur une adresse de mémoire à l'emplacement de mémoire fixe plus la valeur d'incarnation unique.

2. Procédé (500) selon la revendication 1, dans lequel la seconde quantité d'espace mémoire est un multiple de la première quantité d'espace mémoire.

3. Procédé (500) selon l'une quelconque des revendications 1 à 2, dans lequel l'emplacement de mémoire fixe du second tampon mémoire correspond à un début du second tampon mémoire (130, 330).

4. Procédé (500) selon l'une quelconque des revendications 1 à 3, dans lequel la valeur d'incarnation unique est basée sur des entrées comprenant :
un identificateur de processus ;
une valeur d'itération (334) ; et
un nombre attendu d'itérations.

5. Procédé (500) selon l'une quelconque des revendications 1 à 4, dans lequel le processus itératif est répété jusqu'à ce que les données chiffrées dans le premier tampon mémoire (120, 320) aient été déchiffrées et écrites dans le second tampon mémoire (130, 330).

6. Procédé (500) selon l'une quelconque des revendications 1 à 5, dans lequel le processus itératif est mis en œuvre dans un élément matériel (340).

7. Procédé (500) selon l'une quelconque des revendications 1 à 6, comprenant en outre :
la réception, dans le premier tampon mémoire (120, 320), d'une requête pour récupérer l'élément de données déchiffré correspondant à un élément de données chiffré ;
l'invocation de l'élément matériel (340) pour générer la valeur d'incarnation unique basée au moins en partie sur l'entrée de valeur d'itération ; et
le renvoi de l'élément de données déchiffré à partir du second tampon mémoire (130, 330) à partir de l'adresse de mémoire à l'emplacement de mémoire fixe plus la valeur d'incarnation unique.

8. Appareil comprenant :
un premier tampon mémoire (120, 320) comprenant des données chiffrées à déchiffrer pour une utilisation par un processus de calcul (110, 310) ;
un second tampon mémoire (130, 330) ;
des circuits de traitement couplés de manière communicative au premier tampon mémoire (120, 320) et au second tampon mémoire (130, 330), les circuits de traitement étant configurés pour :
déterminer une première quantité d'espace mémoire consommée par le premier tampon mémoire (120, 320) ;
allouer au second tampon mémoire (130, 330) une second quantité d'espace mémoire qui est supérieure à la première quantité d'espace mémoire consommée par le premier tampon mémoire (120, 320) ;
remplir la seconde quantité d'espace mémoire de données aléatoires ;
placer un pointeur sur un emplacement de mémoire fixe du second tampon mémoire (130, 330) ;
décrypter un élément de données qui réside dans le premier tampon mémoire (120, 320) ; et
invoquer un élément matériel (340) pour mettre en œuvre un processus itératif pour :
générer une valeur d'incarnation unique basée au moins en partie sur une entrée de valeur d'itération ; et
écrire l'élément de données déchiffré dans le second tampon mémoire (130, 330) sur une adresse de mémoire à l'emplacement de mémoire fixe plus la valeur d'incarnation unique.

9. Appareil selon la revendication 8, dans lequel la seconde quantité d'espace mémoire est un multiple de la première quantité d'espace mémoire.

10. Appareil selon l'une quelconque des revendications 8 à 9, dans lequel l'emplacement de mémoire fixe du second tampon mémoire correspond à un début du second tampon mémoire (130, 330).

11. Appareil selon l'une quelconque des revendications 8 à 10, dans lequel la valeur d'incarnation unique est basée sur des entrées comprenant :
un identificateur de processus ;
une valeur d'itération (334) ; et
un nombre attendu d'itérations.

12. Appareil selon l'une quelconque des revendications 8 à 11, dans lequel le processus itératif est répété jusqu'à ce que les données chiffrées dans le premier tampon mémoire (120, 320) aient été déchiffrées et écrites dans le second tampon mémoire (130, 330).

13. Appareil selon l'une quelconque des revendications 8 à 12, dans lequel le processus itératif est mis en œuvre dans un élément matériel (340).

14. Appareil selon l'une quelconque des revendications 8 à 13, les circuits de traitement étant configurés pour :
recevoir une requête pour récupérer l'élément de données déchiffré correspondant à un élément de données chiffré dans le premier tampon mémoire (120, 320) ;
invoquer l'élément matériel (340) pour générer la valeur d'incarnation unique basée au moins en partie sur l'entrée de valeur d'itération ; et
renvoyer l'élément de données déchiffré à partir du second tampon mémoire (130, 330) à partir de l'adresse de mémoire à l'emplacement de mémoire fixe plus la valeur d'incarnation unique.
